# EUROPEAN PATENT APPLICATION

(11) **EP 1 727 070 A1**
(43) Date of publication of application: **29.11.2006**
(21) Application number: 05710635.3
(22) Date of filing: 24.02.2005
(51) Int. Cl.: G06K 7/10

(54) **2-DIMENSIONAL CODE REGION EXTRACTION METHOD, 2-DIMENSIONAL CODE REGION EXTRACTION DEVICE, ELECTRONIC DEVICE, 2-DIMENSIONAL CODE REGION EXTRACTION PROGRAM, AND RECORDING MEDIUM CONTAINING THE PROGRAM**

(30) Priority: 04.03.2004 JP 2004061230
(71) Applicant: SHARP KABUSHIKI KAISHA, Osaka-shi, Osaka 545-8522 (JP)
(72) Inventor: TAZAKI, Masaru, Maison de Uehara 101, Kanagawa 212-0053 (JP)
(74) Representative: Müller - Hoffmann & Partner
(86) International application number: PCT/JP2005/002984
(87) International publication number: WO 2005/086074

(57) **Abstract**

A 2-dimensional code region extraction device (Fig. 2) includes: a scan unit 11 for scanning image data containing a 2-dimensional code vertically and horizontally; a blank space detection unit 12 for detecting a blank space portion by determining the white/black gradation of scanned pixels; a non-blank space information calculation unit 13 for calculating the length and central coordinates of a non-blank space portion that exists between the detected blank space portions; a comparison unit 14 for comparing the lengths and central coordinates of the non-blank space portions that exist in the vertical and horizontal directions, respectively so as to determine the presence of a 2-dimensional code, and detecting a 2-dimensional code candidate region; and a rank determination unit 15 for comparing a plurality of 2-dimensional code candidate regions that are detected and ranking them.

## Description

### TECHNICAL FIELD

The present invention relates to a 2-dimensional code region extraction method for extracting a region in which a 2-dimensional code exists, a 2-dimensional code region extraction device, an electronic device, a 2-dimensional code region extraction program, and a recording medium in which such program is recorded.

### BACKGROUND ART

The development in recent years of small and low-power-consumption image sensors has made it possible to build a camera inside portable devices such as a cell phone. As a result, images taken with the built-in camera can be immediately transmitted by electronic mail. In such built-in cameras, however, priority is placed on small size, making their resolution lower than those of conventional digital cameras.

Cell phones these days are also equipped with Internet connection capabilities. In order to connect to the Internet, a URL (Uniform Resource Locator) needs to be entered using the keys. Punching a long URL on a cell phone is time-consuming. An attempt has been made to save the trouble of entering the URL and thus provide improved ease of use by managing URLs with unique numbers and reading printed bar code symbols (to be hereafter referred to as "bar code" whenever appropriate) associated with such numbers with a bar code reader. In such a device, however, it is necessary to connect the bar code reader to the cell phone separately.

The above service can be utilized if the bar codes can be recognized on a bar code image captured with the built-in camera of a camera-equipped cell phone, without using a separate bar code reader.

A technique is currently available for detecting a bar code or a 2-dimensional code as 2-dimensional image data with a 2-dimensional image detecting means, wherein the image data is temporarily stored in an image data memory that is scanned to read the code. This technique, however, does not show where in the image the 2-dimensional code is located. As a result, it is necessary to scan the entire image data or all of image regions at predetermined intervals, resulting in increased time.

In order to solve this problem, a method has been proposed whereby a 2-dimensional code region in the image is extracted.

For example, Patent Document 1 discloses that an image is scanned not just in one direction but also in the opposite direction alternately, whereby the need to scan the entire width of the image is eliminated and the required time can be reduced. Further, upon detecting a point of change in pixel values during a scan, a line with a certain width is detected, and then an L-shape, which is characteristic of a 2-dimensional code, is detected. In this way, the region where the 2-dimensional code exists is narrowed down.

Patent Document 2 discloses that image data is divided into uniform small blocks, and each block is briefly scanned so as to calculate the level of complexity of the block. The level of complexity herein refers to the number of times that a gradation difference exceeding a threshold value is detected. Generally, blocks with higher probabilities of presence of a 2-dimensional code have higher levels of complexity. From this viewpoint, the individual blocks are scanned in order of decreasing level of complexity so as to read the 2-dimensional code.
Patent Document 1: JP Patent Publication (Kokai) No. 2000-293615 A
Patent Document 2: JP Patent Publication (Kokai) No. 2001-22881 A

### DISCLOSURE OF THE INVENTION

The foregoing conventional methods for detecting the region where a 2-dimensional code exists have the following problems.

In the method of Patent Document 1, because the L-shape of a 2-dimensional code is detected, images may be erroneously detected when they contain geometric patterns, such as alphabets. Further, the method is not compatible with the QR code (2-dimensional bar code) due to the lack of a side forming a solid line.

In the method of Patent Document 2, the level of complexity increases when the image contains characters, patterns, textures, or other fine noise similar to the data cells, in addition to the 2-dimensional code. Thus, this method by itself is incapable of determining the presence of a 2-dimensional code. Because data is extracted in order of decreasing level of complexity, noise could also be read early in the order. As a result, no time reduction is obtained.

In view of the foregoing problems, it is an object of the present invention to provide a 2-dimensional code region extraction method, a 2-dimensional code region extraction device, an electronic device, a 2-dimensional code region extraction program, and a recording medium in which the program is recorded, whereby a 2-dimensional code existing in image data can be read accurately and at high speed, without being influenced by noise or the like.

The invention provides a 2-dimensional code region extraction method for extracting a region in which a 2-dimensional code exists, the method comprising the steps of: scanning image data containing a 2-dimensional code vertically and horizontally; determining the white/black gradation of scanned pixels, and detecting at least two blank space portions each consisting of a sequence of white pixels exceeding a predetermined number of pixels; calculating the length of a non-blank space portion that exists between the detected blank space portions, and its central coordinates; and comparing the lengths and central coordinates of the non-blank space portions that exist in the vertical and horizontal directions, respectively so as to determine the presence of a 2-dimensional code, and detecting a 2-dimensional code candidate region. Preferably, the method includes a step of calculating the number of similar areas based on the position and size of the regions cited as candidates so as to rank the region candidates.

The image is scanned at regular intervals (as calculated from the minimum number of pixels of which a 2-dimensional code can be comprised, depending on camera performance), and a blank space portion (quiet zone) having a width not smaller than a predetermined width that exists around the 2-dimensional code is detected. When the image is scanned over the coordinates where the 2-dimensional code exists, two blank space portions would be detected, the fact of which is utilized. Because a 2-dimensional code is characteristically substantially square in shape, a region in which a 2-dimensional code exists can be extracted by scanning the image vertically and horizontally and considering the relationship between the positions and distances of the blank space portions. By narrowing down the region in which a 2-dimensional code exists in the image, the time it takes for recognizing the 2-dimensional code can be reduced. As a result, accurate and high-speed reading can be performed without being influenced by noise or the like. Further, if a plurality of 2-dimensional codes exist in an image, they can be efficiently read.

Preferably, the step of detecting a 2-dimensional code candidate region comprises detecting a plurality of 2-dimensional code candidate regions, comparing them, and then ranking them.

Preferably, the blank space portion detecting step comprises detecting a blank space portion that exists around the 2-dimensional code.

The scanning step may comprise scanning the image data at regular intervals.

In a more preferred embodiment, the regular interval is not greater than one half of the length of one of the sides of which a 2-dimensional code of a minimum possible size on the image data is composed.

The invention also provides a 2-dimensional code region extraction device comprising: scan means for scanning image data containing a 2-dimensional code vertically and horizontally; blank space portion detection means for determining the white/black gradation of scanned pixels and detecting at least two blank space portions each consisting of a sequence of white pixels exceeding a predetermined number of pixels; non-blank space portion calculation means for calculating the length of a non-blank space portion that exists between the detected blank space portions, and its central coordinates; and 2-dimensional code candidate region extraction means for comparing the lengths and central coordinates of the non-blank space portions that exist in the vertical and horizontal directions, respectively so as to determine the presence of a 2-dimensional code, and detecting a 2-dimensional code candidate region.

Preferably, the device further comprises rank determination means for comparing a plurality of 2-dimensional code candidate regions detected by the 2-dimensional code candidate region extraction means, and ranking them.

The invention further provides an electronic device capable of reading a 2-dimensional bar code symbol, comprising the aforementioned 2-dimensional code region extraction device.

In another aspect, the invention provides a program for causing a computer to carry out the steps of:
scanning image data containing a 2-dimensional code vertically and horizontally;
determining the white/black gradation of scanned pixels, and detecting at least two blank space portions each consisting of a sequence of white pixels exceeding a predetermined number of pixels;
calculating the length and central coordinates of a non-blank space portion that exists between the detected blank space portions,; and
comparing the lengths and central coordinates of the non-blank space portions that exist in the vertical and horizontal directions, respectively so as to determine the presence of a 2-dimensional code, and detecting a 2-dimensional code candidate region.

The invention also provides a computer-readable recording medium in which a program is recorded, the program causing a computer to carry out the steps of: scanning image data containing a 2-dimensional code vertically and horizontally; determining the white/black gradation of scanned pixels, and detecting at least two blank space portions each consisting of a sequence of white pixels exceeding a predetermined number of pixels; calculating the length and central coordinates of a non-blank space portion that exists between the detected blank space portions; and comparing the lengths and central coordinates of the non-blank space portions that exist in the vertical and horizontal directions, respectively so as to determine the presence of a 2-dimensional code, and detecting a 2-dimensional code candidate region.

Thus, in accordance with the invention, when a region in which a 2-dimensional code exists is extracted from an image data memory in which 2-dimensional image data is temporarily stored, the 2-dimensional code can be efficiently and accurately read.

### BRIEF DESCRIPTION OF THE DRAWINGS

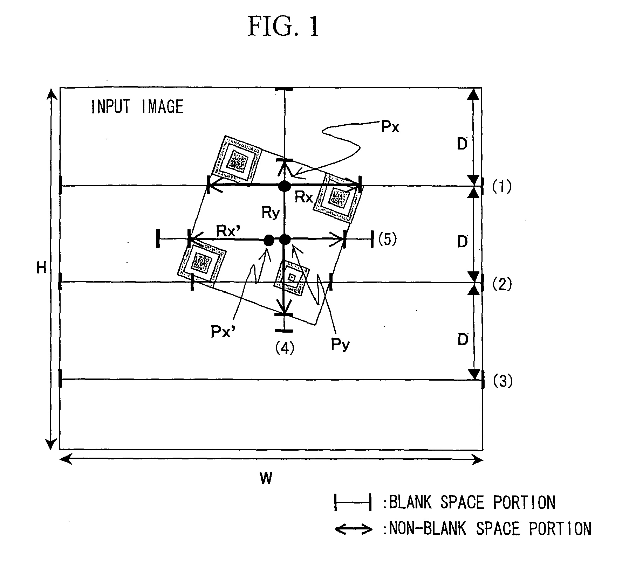

Fig. 1 shows the relationship between image data and scanning lines in a 2-dimensional code region extraction device and method according to an embodiment of the invention.
   (1) to (3): scanning lines in the process of (S1), (4): a scanning line in the process of (S3), (5): a scanning line in the process of (S30), Rx: length of a non-blank space portion (horizontal) calculated from the blank space portion detected in (1), Ry: length of a non-blank space portion (vertical) calculated from the blank space portion detected in (4), Rx': length of a non-blank space portion (horizontal) calculated from the blank space portion detected in (5), Px: central coordinates of Rx, Py: central coordinates of Ry, and Px': central coordinates of Rx'.
Fig. 2 shows a block diagram of an example of the configuration of the 2-dimensional code region extraction device according to the present embodiment.
Fig. 3 shows a flowchart of a main routine process of the 2-dimensional code extraction device and method according to the present embodiment.
Fig. 4 shows an example of a QR code being scanned by the 2-dimensional code region extraction device and method according to the present embodiment.
Fig. 5 shows a flowchart of a routine process for detecting a blank space in the horizontal direction according to the 2-dimensional code region detection device and method according to the present embodiment.
Fig. 6 shows a flowchart of a routine process for detecting a 2-dimensional code candidate region with the 2-dimensional code region extraction device and method according to the present embodiment.
Fig. 7 shows a flowchart of a routine process for re-comparing 2-dimensional code candidate regions by the 2-dimensional code region extraction device and method according to the present embodiment.
Fig. 8 shows a comparison of 2-dimensional code candidate regions according to the 2-dimensional code region extraction device and method of the present embodiment.

### EXPLANATION OF THE NUMERALS

- 1: 2-dimensional code region extraction device (electronic device)
- 10: control unit
- 11: scan unit (scan means)
- 12: blank space detection unit (blank space portion detection means)
- 13: non-blank space information calculation unit (non-blank space portion calculation means)
- 14: comparison unit (2-dimensional code candidate region extraction means)
- 15: rank determination unit (rank determination means)
- 16: memory unit
- H: height of input image data
- W: width of input image data
- 1A, 1B, 1C, 1D: sides of which a 2-dimensional code candidate region 1 is comprised
- 2A, 2B, 2C, 2D: sides of which a 2-dimensional code candidate region 2 is comprised

### BEST MODES FOR CARRYING OUT THE INVENTION

In the following, embodiments of the 2-dimensional code region extraction method, 2-dimensional code region extraction device, and electronic device according to the invention will be described in detail with reference to the attached drawings.

Fig. 1 shows the relationship between image data and scanning lines concerning a 2-dimensional code region extraction device and method according to an embodiment of the invention.

More specifically, Fig. 1 shows the positional relationship between a process performed by the 2-dimensional code region extraction device or method for extracting a 2-dimensional code region on the image data and the image data. The present embodiment is described with reference to Fig. 1 showing the image data consisting of H pixels vertically × W pixels horizontally. The 2-dimensional code existing on the image data is a QR code.

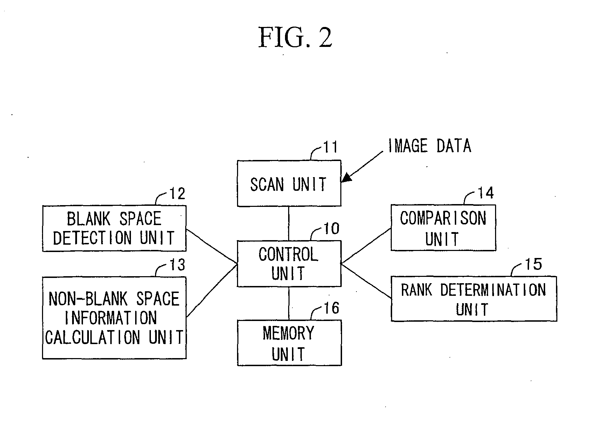

Fig. 2 shows a block diagram of an example of the configuration of the 2-dimensional code region extraction device. The 2-dimensional code region extraction device and method according to the present embodiment can be applied to portable communications terminals such as a camera-equipped cell phone or a PHS (Personal Handy-Phone System), for example.

Referring to Fig. 2, a 2-dimensional code region extraction device 1 includes: a control unit 10 for overall control of the device; a scan unit 11 (scan means) for scanning image data containing a 2-dimensional code in the vertical and horizontal directions; a blank space detection unit 12 (blank space portion detection means) for determining the white/black gradation of scanned pixels so as to detect at least two blank space portions each consisting of a sequence of white pixels exceeding a predetermined number of pixels; a non-blank space information calculation unit 13 (non-blank space portion calculation means) for calculating the length and central coordinates of a non-blank space portion that exists between the detected blank space portions; a comparison unit 14 (2-dimensional code candidate region extraction means) for comparing the lengths and central coordinates of non-blank space portions that exist in the vertical and horizontal directions, respectively so as to determine the presence of a 2-dimensional code and detect a 2-dimensional code candidate region; a rank determination unit 15 (rank determination means) for comparing a plurality of detected 2-dimensional code candidate regions and ranking them; and a memory unit 16 consisting of an image data memory in which 2-dimensional image data and calculated data are temporarily stored.

The scan unit 11 scans the image data vertically and horizontally, as shown in Fig. 1, so as to make a white/black determination based on the gradation values. The range and direction of scanning are designated by the control unit 10 each time a scan is conducted.

The blank space detection unit 12 determines, through the control unit 10, whether or not pixels scanned by the scan unit 11 constitute a blank space portion whose length is not smaller than a predetermined length. If a blank space portion is detected, relevant information is recorded in the memory unit 16.

The non-blank space information calculation unit 13 calculates the length of a non-blank space portion and its central coordinates based on the blank space information detected by the blank space detection unit 12.

The comparison unit 14 compares the lengths and positions of the non-blank space portions that were calculated through the control unit 10 based on the blank space information detected by the vertical and horizontal scanning, respectively and determines the presence of a 2-dimensional bar code, thus detecting a 2-dimensional code candidate region.

The rank determination unit 15 compares the multiple 2-dimensional code candidate regions detected by the comparison unit 14, and selects a region with the highest probability of the presence of a 2-dimensional code.

Hereafter, a procedure for implementing the 2-dimensional code region extraction method will be described.

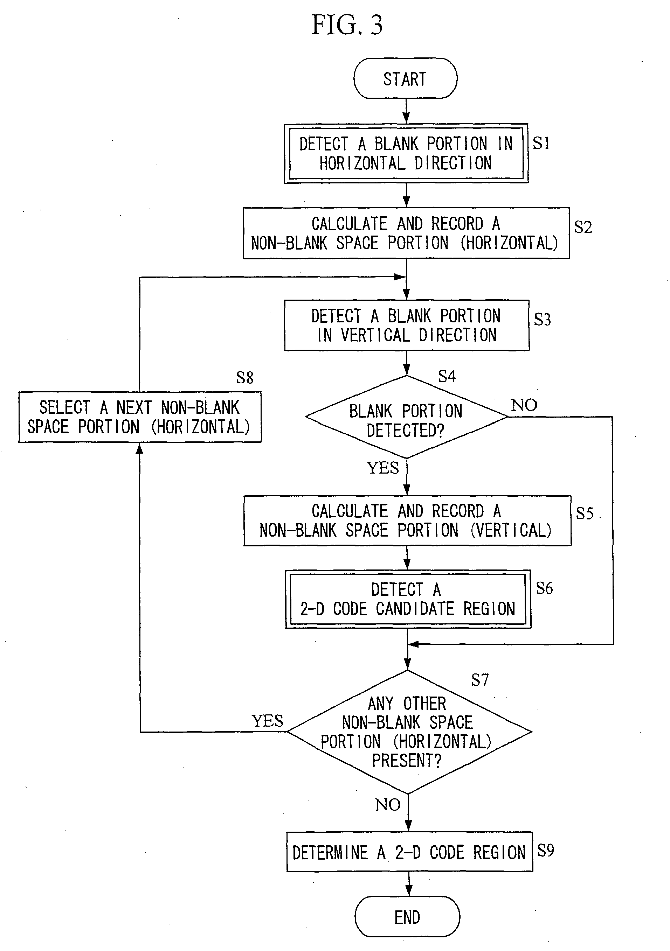

Fig. 3 shows a flowchart of a main routine process carried out by the 2-dimensional code region extraction device and method, in which "S" indicates the individual steps of the flow.

In step S1, the image data of Fig. 1 captured by an image capturing means, such as a camera, is scanned at predetermined intervals D in the horizontal direction, so as to detect a blank space portion whose width is not smaller than a predetermined value. A 2-dimensional code always contains a blank space portion having a width not smaller than a predetermined width, which is referred to as a quiet zone or margin, around the 2-dimensional code. In the case of a QR code, a blank space portion must contain four or more cells. When the image data is scanned over a QR code, blank space portions would be detected at both ends, as shown in Fig. 1(1). Thus, portions of the image where nothing is written or where the image is painted with a single color can be roughly distinguished from a portion where a 2-dimensional code exists based on the aforementioned condition.

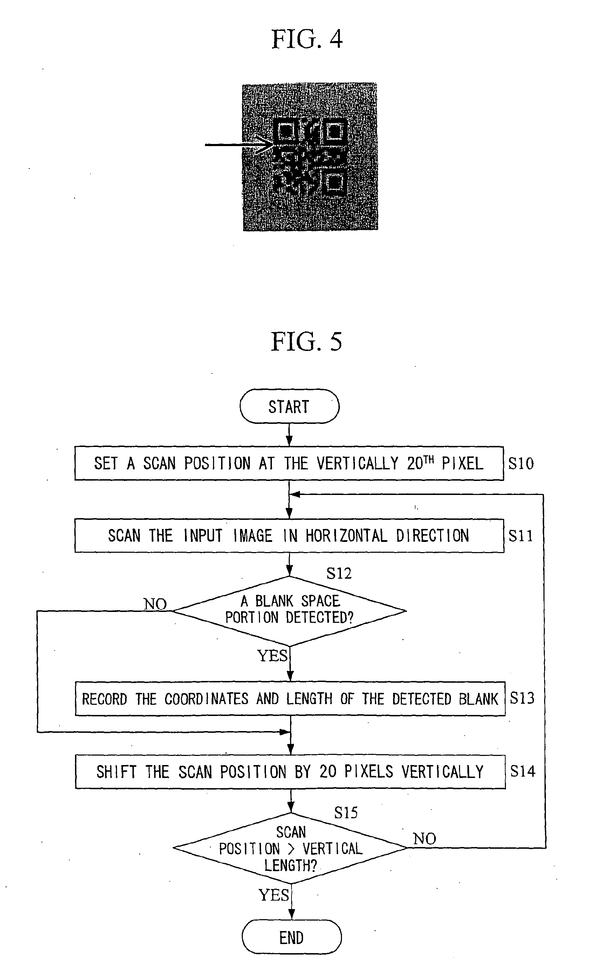

The interval D mentioned herein is determined to be "not greater than one half of the length of one of the sides of which a 2-dimensional code of a minimum possible size on the image data is composed," whereby fast and reliable determination of the region where a QR code exists is made possible. Even when the 2-dimensional codes of detected objects are the same, the image size or position that the 2-dimensional codes can take in the image data may vary depending on their positional relationship with the 2-dimensional image capturing means. Generally, when a minification optical system is employed, the image size of the detected 2-dimensional code becomes smaller as its distance from the optics, such as a focusing lens, increases. However, because the code would be unreadable if the displacement from the focal length becomes too much, the minimum possible size that the 2-dimensional code can take in the image data is determined by the condition that the code be detected appropriately. "Not greater than one half" is intended to ensure that a 2-dimensional code is crossed at least twice regardless of its size, so that the region of the 2-dimensional code can be reliably extracted. When interval D is set to be equal to "the length of one of the sides of which a 2-dimensional code of a minimum possible size on the image data is composed," the number of blank space portions detected on one line increases if the image contains a small-sized 2-dimensional code and much noise area of smaller sizes. As a result, many noise regions could be mistaken for 2-dimensional codes, in addition to the region of the 2-dimensional code to be detected, and such noise regions could be designated as candidates. If the scanned position is as indicated by the arrow shown in Fig. 4 (where white pixels continue in the scanned QR code), the vertical blank space portion, which will be described later, would not be detected, so that the scanned shape is determined to be not that of the QR code and could be eliminated as a candidate.

In order to avoid such phenomenon, in accordance with the present embodiment, the interval D is set to be "not greater than one half of the length of one of the sides of which a 2-dimensional code of a minimum possible size on the image data is composed," and at least two locations are scanned within a range in which a 2-dimensional code exists. In this way, the 2-dimensional code can be detected reliably and at high speed regardless of the size of the 2-dimensional code. In the present example, each cell consists of two pixels, so that the minimum image size that the QR code can take in the image data is 40 pixels. Because a blank space portion consists of four or more cells, a blank space portion is detected when 12 or more white pixels continue, with the interval D consisting of 20 pixels.

The process for detecting a blank space portion in the horizontal direction in the above step S1 will be described with reference to a sub-routine shown in Fig. 5.

Referring back to the main flow of Fig. 3, after the horizontal blank space portion detection process is completed in step S1, a process is carried out in step S2 to calculate the information about a non-blank space portion from the two blank space portions found, between which the non-blank space portion is occupied. In this process, based on the recorded information about the blank space portion (coordinate position, length), the length Rx of the non-blank space portion and its central coordinates Px are calculated as shown in Fig. 1 and then recorded. This process is also carried out for all of the blank space portions detected on the individual lines scanned by the aforementioned process of step S1. While such calculation process is also performed in the following processes, the present 2-dimensional code region extraction method can be speeded up because it does not include any complex calculation step throughout the method process.

Then, in step S3, a vertical scanning is performed using the information about the horizontal non-blank space portion calculated by the process in step S2. A certain area that is determined by the length Rx, with the central coordinates Px of the horizontal non-blank space portion being its center, is scanned vertically as shown in Fig. 1(4), thereby detecting a blank space portion having a width not smaller than a predetermined width. The range that is vertically scanned must be not smaller than that determined by the length Rx of the horizontal non-blank space portion, with the central coordinates Px being as its center, to which the interval D×2 is added from the viewpoint of detecting two blank space portion existing on either end of the 2-dimensional code. However, as mentioned above, if the position indicated by the arrow of Fig. 4 is scanned, Rx would be extremely short, potentially making it impossible to detect the vertical blank space portion. Therefore, as a countermeasure, the interval D in the process in aforementioned step S 1 is set to be "not greater than one half of the length of one of the sides of which a 2-dimensional code of a minimum possible size on the image data is composed," so that the region of a 2-dimensional code can be extracted. Further, in order to eliminate the phenomenon in which the vertical blank space portion cannot be detected, the vertically scanned range is somewhat extended so as to make it possible to detect the vertical blank space portion.

After the process in step S3 is performed, it is determined in step S4 whether or not the blank space portion has been detected. If two or more blank space portions with a certain width have not been detected, control proceeds to step S7. If such blank space portions have been detected, control proceeds to step S5. In step S5, the length Ry of the non-blank space portion that exists between the two blank space portions and its central coordinates Py are determined. Then, in step S6, the information about the vertical and horizontal non-blank space portions that were calculated by the process in step S2 and by the process in step S5 respectively are compared, respectively so as to detect a 2-dimensional code candidate region.

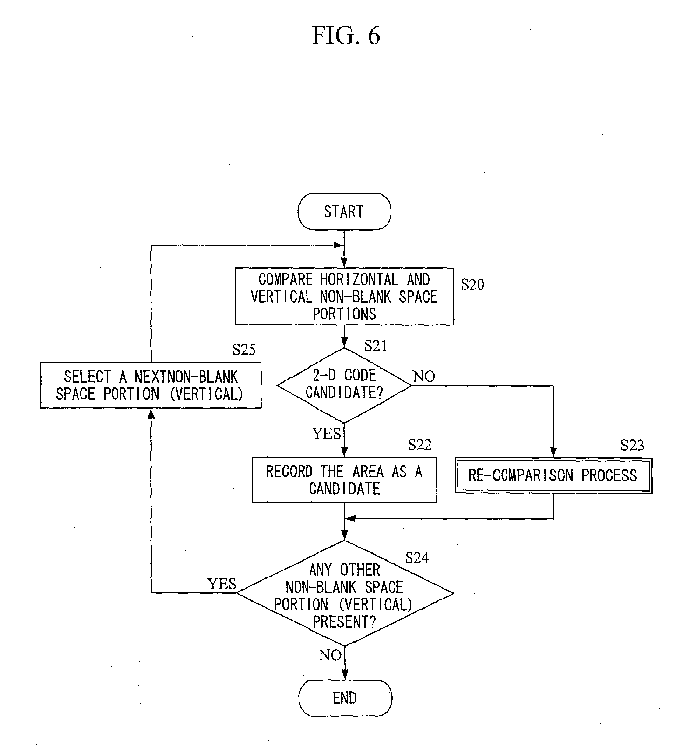

The process for detecting the 2-dimensional code candidate region in the above step S6 will be described with reference to a sub-routine shown in Fig. 6.

In step S7, it is determined whether or not there are other non-blank space portions (horizontal). Specifically, in step S7, it is determined if there is any among the horizontal non-blank space portions calculated by the process in step S2 that has not been subjected to the comparison process. If there is a non-blank space portion that has not been subjected to the comparison process, such non-blank space portion is selected in step S8, and then control returns to step S3, from which the series of processes is repeated. If there is no non-blank space portion that has yet to be subjected to the comparison process, the regions cited as 2-dimensional code candidates in step S9 are compared with one another. Then, three regions, for example, with the highest possibility of the presence of a 2-dimensional code are selected, and the present flow comes to an end.

Fig. 5 shows a flowchart of a routine process for detecting a blank space in the horizontal direction by the 2-dimensional code region extraction method. The flowchart shows the process for detecting a horizontal blank space portion in step S1 of Fig. 3 in detail.

In order to scan the input image horizontally and detect a blank space portion, the scan position is initially aligned with a position vertically displaced from the top of the input image by the interval D in step S10. Then, the image is scanned horizontally in step S11, and the white/black determination is made on a pixel-by-pixel basis so as to detect a blank space portion having a width not smaller than a predetermined width. The scanned position is thus displaced by the interval D so that a 2-dimensional code, even if it is located toward the edge of the image, can be crossed at at least two points because of the setting of the interval D.

Thereafter, it is determined in step S12 whether or not two or more blank space portions having a predetermined width have been detected. If two or more blank space portions having a predetermined width have not been detected, control proceeds to step S 14 where the scanned position is displaced in the vertical direction by the interval D (=20 pixels). If such blank space portions have not been detected, the coordinate values of the beginning of the blank space portion and its length are recorded in step S 13, and then the process of step S 14 is performed.

In step S 15, the scanned position and the vertical length H of the image data are compared. If the scanned position exceeds the vertical length of the image data (scanned position > vertical length), the process for detecting a blank space in the horizontal direction is terminated, and control returns to step S 1 of the main routine of Fig. 3. If the scanned position does not exceed the vertical length of the image data, control returns to the process of step S11, and the series of processes is repeated until the scanned position exceeds the vertical length of the image data.

Fig. 6 shows a flowchart of a routine process for detecting a 2-dimensional code candidate region by the 2-dimensional code region extraction method. The flowchart shows the process for detecting a 2-dimensional code candidate region in step S6 of Fig. 3 in detail.

First, in step S20, the horizontal and vertical non-blank space portions are compared. The compared items are the lengths {Rx, Ry} of the selected vertical and horizontal non-blank space portions, and the coordinate displacement between the central coordinates {Px, Py}. Based on these two conditions, the presence of a 2-dimensional code is determined. Because a 2-dimensional code is substantially square in shape, the vertical and horizontal lengths are substantially the same when measured at the central coordinates of the 2-dimensional code. By taking advantage of such geometric feature, a region consisting of vertical and horizontal non-blank space portions is cited as a candidate region (to be hereafter referred to as a 2-dimensional code candidate region) if the difference between the lengths Rx and Ry of the non-blank space portions is within a certain range, and if the distance between the two central coordinates Px and Py is within a certain range. By this process, it becomes possible to narrow down the 2-dimensional code regions without being influenced by something other than noise area that is square in shape.

The upper-limit range herein determined is such that the difference between the lengths Rx and Ry of the non-blank space portions is not more than 20%, and that the difference in distance between the two central coordinates Px and Py is not more than 1/2 of the interval D (=10 pixels). The difference in the lengths of the non-blank space portions is based on the empirical rule that when a 2-dimensional code is photographed with an image capture such as a camera, the image is normally taken from directly above the 2-dimensional code, such that the ratio of the vertical length to the horizontal length of a square-shaped 2-dimensional code does not much vary even on the image data. Further, the difference between the central coordinates of the non-blank space portions is based on the fact that, because the scan is conducted at intervals D so as to detect the blank space portions, the probability is high that a 2-dimensional code exists in another non-blank space portion if the two central coordinates are spaced apart by a distance not smaller than 1/2 of the interval D.

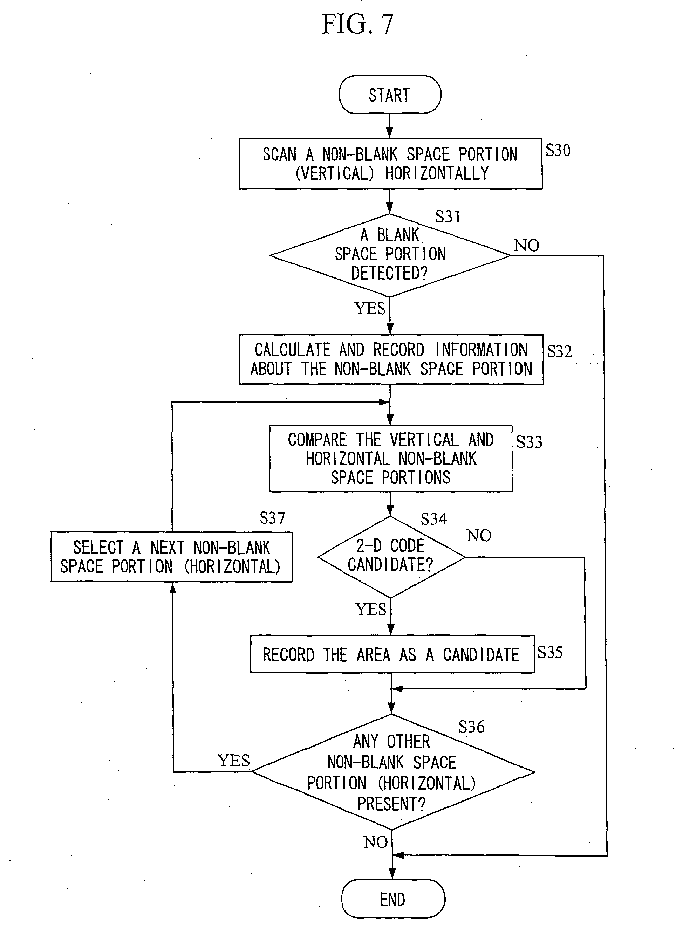

Next, it is determined whether or not there is the possibility of a 2-dimensional code in step S21. If it is determined that there is the possibility of a 2-dimensional code, the region is recorded in step S22 as a 2-dimensional code candidate region, and control proceeds to the determination in step S24. If it is determined that the region does not involve a 2-dimensional code in step S21, a re-comparison process is performed in step S23, and then control proceeds to a decision in step S24. The re-comparison process in step S23 will be described in detail later with reference to Fig. 7.

In step S24, it is determined whether or not there is any among the vertical non-blank space portions calculated in step S5 of Fig. 3 that has not been subjected to a comparison process. If there is a non-blank space portion that has not been subjected to the comparison process, such non-blank space portion is selected in step S25, and control returns to step S20 from which the series of processes is repeated. If there is no such non-blank space portion that has yet to be subjected to the comparison process, the comparison process routine is terminated and control returns to step S6 of the main routine of Fig. 3.

Fig. 7 shows a flowchart of a routine process for the re-comparison of 2-dimensional code candidate regions by the 2-dimensional code region extraction method. The flowchart shows the re-detection process in step S23 of Fig. 6 in detail.

If it is determined in step S21 of Fig. 6 that the candidate does not contain a 2-dimensional code, the present routine is entered, and in step S30 a certain area that is calculated from Ry, with the central coordinates Py of the vertical non-blank space portion compared being as its center, is scanned in the horizontal direction.. Then, in step S31, a white/black determination is carried out to determine whether or not a blank space portion having a width not smaller than a predetermined width is detected. In this step S31, it is determined whether or not two or more blank space portions having a width not smaller than a predetermined width have been detected. If two or more of such blank space portions are not detected, it is judged that there was no 2-dimensional code in the vertical non-blank space portion, and the present re-comparison process is terminated and control returns to the routine of Fig. 6.

If two or more blank space portions have been detected, the length Rx' of the non-blank space portion and its central coordinates Px' are calculated in step S32 and recorded. As in the routine of Fig. 6, the lengths Ry and Rx' of the horizontal and vertical non-blank space portions and their central coordinates Py and Px' are compared respectively in step S33.

In step S34, it is determined if the area is a 2-dimensional code candidate. If it is determined that the area could be a 2-dimensional code, the area is cited as a 2-dimensional code candidate region in step S35, and then control proceeds to step S36. On the other hand, if it is determined that the area is not a 2-dimensional code, control simply proceeds to step S36.

In step S36, it is determined if there is any among the calculated non-blank space portions in the horizontal direction that has not been subjected to a comparison process. If there is a non-blank space portion that has not been subjected to a comparison process, the non-blank space portion is selected in step S37, and control returns to step S33 where the process is repeated. If there is no such non-blank space portion in step S36 that has yet to be subjected to a comparison process, the present comparison process routine is terminated and control returns to the routine of Fig. 6.

Thus, in accordance with the scanning method of the invention, a 2-dimensional code in an image is crossed at least twice when it is scanned in the horizontal direction (step S1 of Fig. 3). In a process (step S20 of Fig. 6) of the process (step S6 of Fig. 3), a comparison process is carried out on vertical and horizontal non-blank space portions. If the condition for the presence of a 2-dimensional code is not satisfied, a re-comparison process (step S23 of Fig. 6 and the routine of Fig. 7) is performed, thereby ensuring the reliable detection of a 2-dimensional code. Thus, a 2-dimensional code candidate region is found by each of the scan (1) and the scan (2) shown in Fig. 1, so that, as a result, a plurality of 2-dimensional code candidate regions with similar size and position are detected. Accordingly, in a process (step S9 of Fig. 3), the sizes and positions of the regions cited as 2-dimensional code candidates are compared, respectively and the number of 2-dimensional code candidate regions that are considered to be identical is counted.

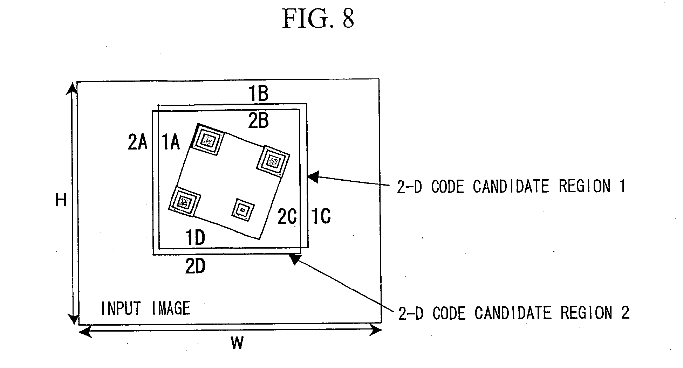

Fig. 8 shows how 2-dimensional code candidate regions are compared in accordance with the 2-dimensional code region extraction method.

Specifically, as shown in Fig. 8, displacements between the coordinates of the four sides of a 2-dimensional code candidate region 1 and a 2-dimensional code candidate region 2 are measured. If the displacements are within a certain range, the regions are considered to be identical, and an intermediate region with respect to the thus compared regions is determined as a 2-dimensional code candidate region, thereby putting the two 2-dimensional code candidate regions together. Referring to Fig. 8, 1B and 2B, and 1D and 2D are compared in terms of their vertical positions, while 1A and 2A, and 1C and 2C are compared in their horizontal positions. Herein the admissible displacement is set to be within 1/2 of the interval D (=10 pixels) for the same reason as explained for the process (step S20 of Fig. 6). In this way, top three 2-dimensional code candidate regions with the highest numbers of the count are eventually selected as 2-dimensional code regions, and then the main routine of Fig. 3 is completed.

Through the above processes, it becomes possible to extract a 2-dimensional code region on image data at high speed and reliably. If noise is contained in the image data, such noise can be eliminated in a mixed manner from the candidate area by the process (step S1 of Fig. 3) for the detection of a blank space portion, the process (step S6 of Fig. 3) for the detection of a 2-dimensional code candidate area, and the process (step S9 of Fig. 3) for the determination of a 2-dimensional code area, whereby a 2-dimensional code can be exclusively extracted. Further, if a plurality of 2-dimensional codes are present in the image, they can be efficiently read.

Thus, the 2-dimensional code region extraction device 1 of the present embodiment includes: a scan unit 11 whereby image data containing a 2-dimensional code is scanned both vertically and horizontally; a blank space detection unit 12 for determining the white/black gradation of scanned pixels, and detecting at least two blank space portions consisting of a sequence of white pixels exceeding a predetermined number of pixels; a non-blank space information calculation unit 13 for calculating the length of a non-blank space portion between the detected blank space portions and its central coordinates; a comparison unit 14 for comparing the lengths and central coordinates of the non-blank space portions existing in the vertical and horizontal directions, respectively so as to determine the presence of a 2-dimensional code and detect a 2-dimensional code candidate region; and a rank determination unit 15 whereby the detected multiple 2-dimensional code candidate regions are compared and ranked. In accordance with the 2-dimensional code region extraction method, image data that contains a 2-dimensional code is scanned vertically and horizontally based on a geometrical feature of a 2-dimensional code, and then the white/black gradation of the scanned pixels is determined so as to detect a blank space portion. Thereafter, the length of a non-blank space portion that exists between the detected blank space portions and its central coordinates are calculated, and the lengths and central coordinates of the non-blank space portions that exist in the vertical and horizontal directions are compared respectively. Based on the position and size of the region cited as a candidate by the aforementioned comparison means, the number of similar areas is calculated and the region candidates are ranked. In this way, a 2-dimensional code region in the image can be narrowed down, whereby the time required for recognition can be reduced and, as a result, accurate and high-speed reading can be performed without being influenced by noise and the like. If a plurality of 2-dimensional codes exist in the image, they can be efficiently read.

The foregoing is an exemplary description of a preferred embodiment of the invention. The scope of the invention is not limited by such embodiment.

It goes without saying that the invention is not limited to the foregoing embodiment and that various changes or modifications can be made within the technical scope of the invention. The same applies to various applications. For example, while in the foregoing embodiment the image is scanned starting with the horizontal direction in the process (step S 1 of Fig. 3), scanning may be started with the vertical direction such that the scan directions are reversed. More generally speaking, the scan direction does not matter as long as the two non-blank space portions are perpendicular to each other at the time of the comparison process. Further, the interval D may be made smaller as long as it is "not greater than one half of the length of one of the sides of which a 2-dimensional code of a minimum possible size on the image data is composed." Although this might result in a decrease in processing speed, there would be no influence of the processing capacity of the platform for operating the 2-dimensional code region extraction device on the accuracy of the 2-dimensional code region extraction method.

The invention is applicable to any electronic device having a 2-dimensional code region extraction device or method whereby, on an image data memory where two-dimensional image data is temporarily stored, a region in which a 2-dimensional code exists is extracted. For example, such electronic device may be a camera-equipped (either internally or externally) device, such as a digital camera, camera-equipped cell phone, portable information terminals such as a PDA (Personal Digital Assistants), or an information processing device such as a personal computer. The code as an object of reading may be of any type.

In the description of the foregoing embodiment, the terms "2-dimensional code region extraction device and method" have been used. This is merely for the sake of convenience, and it goes without saying that many other terms are also possible, such as 2-dimensional bar code display device and method, information reading apparatus, or 2-dimensional code extraction method.

The scanning line display shown in Figs. 1 and 8 according to the foregoing embodiment is an example and other methods of display may be employed.

While the white/black gradation of pixels is determined when detecting a blank space portion, any other method may be used as long as it is capable of detecting a blank space portion. The term "white/black" herein is employed for convenience's sake, meaning that it refers to not only literally white and black but also those symbols that are indicated by specific colors or those whose base color is any color other than white. For example, in printed matter or on a liquid crystal display unit where symbols are printed or displayed in color, the symbols by themselves are sometimes represented by colors other than white and black. In other words, while the blank space detection unit 12 determines the white/black gradation of scanned pixels and detects at least two portions in which pixels exceeding a predetermined number of pixels are continuously present as blank space portions, such portions where pixels exceeding a predetermined number of pixels are continuously present could be any color other than white (such as black, when the symbols are printed in white on a black background).

The type and number of the individual circuit portions of the 2-dimensional code region extraction device, such as the scan unit and the memory unit, or how they are connected, are not limited to those in the foregoing embodiment.

The 2-dimensional code region extraction device and method described above may be implemented by a program for operating or carrying out the 2-dimensional code region extraction device and method. Such program is stored in a computer-readable recording medium. In accordance with the invention, the recording medium may be provided by the main memory of the control unit 10 shown in Fig. 2. It may also be provided by any other program medium, such as a CD-ROM, which can be inserted and read in a program reading device such as a CD-ROM drive provided as an external memory device. In any case, the stored program may be either accessed and run by the CPU in the control unit 31, or it may be read and downloaded in a program memory area (not shown) where it is run. Such downloadable program is assumed to be stored in each device in advance.

The aforementioned program medium may be a recording medium that can be detached from a portable terminal device or an information processing device. Examples include magnetic tapes, cassette tapes and other magnetic discs, optical discs such as CD-ROM, CD-R/RW, MO, MD, DVD-ROM, DVD-RAM, and DVD-RW, cards such as a PC card, CompactFlash card (registered trademark), SmartMedia (registered trademark), IC card, SD card (registered trademark); and Memory Stick (registered trademark), and semiconductor memories such as a mask ROM, EPROM, EEPROM, and flash ROM, by which the program is carried in a fixed manner.

Alternatively, the medium may carry the program in a fluid manner such that the program can be downloaded from an external communications network via a communications connecting means, such as an Internet connection provider or a server terminal. When the program is downloaded via a communications network, a download program may be stored in advance or it may be installed from a separate recording medium. The stored contents of the recording medium are not limited to a program but they may be data.

## Claims

1. A 2-dimensional code region extraction method for extracting a region in which a 2-dimensional code exists, the method comprising the steps of:
scanning image data containing a 2-dimensional code vertically and horizontally;
determining the white/black gradation of scanned pixels, and detecting at least two blank space portions each consisting of a sequence of white pixels exceeding a predetermined number of pixels;
calculating the length and central coordinates of a non-blank space portion that exists between the detected blank space portions; and
comparing the lengths of the non-blank space portions that exist in the vertical and horizontal directions and their central coordinates respectively so as to determine the presence of a 2-dimensional code, and detecting a 2-dimensional code candidate region.

2. The 2-dimensional code region extraction method according to claim 1, wherein the step of detecting a 2-dimensional code candidate region comprises detecting a plurality of 2-dimensional code candidate regions, comparing them, and then ranking them.

3. The 2-dimensional code region extraction method according to claim 1, wherein the blank space portion detecting step comprises detecting a blank space portion that exists around the 2-dimensional code.

4. The 2-dimensional code region extraction method according to claim 1, wherein the scanning step comprises scanning the image data at regular intervals.

5. The 2-dimensional code region extraction method according to claim 4, wherein the regular interval is not greater than one half of the length of one of the sides of which a 2-dimensional code of a minimum possible size on the image data is composed.

6. A 2-dimensional code region extraction device comprising:
scan means for scanning image data containing a 2-dimensional code vertically and horizontally;
blank space portion detection means for determining the white/black gradation of scanned pixels and detecting at least two blank space portions each consisting of a sequence of white pixels exceeding a predetermined number of pixels;
non-blank space portion calculation means for calculating the length and central coordinates of a non-blank space portion that exists between the detected blank space portions; and
2-dimensional code candidate region extraction means for comparing the lengths and central coordinates of the non-blank space portions that exist in the vertical and horizontal directions, respectively so as to determine the presence of a 2-dimensional code, and detecting a 2-dimensional code candidate region.

7. The 2-dimensional code region extraction device according to claim 6, further comprising rank determination means for comparing a plurality of 2-dimensional code candidate regions detected by said 2-dimensional candidate region extraction means, and ranking them.

8. An electronic device capable of reading a 2-dimensional bar code symbol, comprising the 2-dimensional code region extraction device according to claim 6 or 7.

9. A program for causing a computer to carry out the steps of:
scanning image data containing a 2-dimensional code vertically and horizontally;
determining the white/black gradation of scanned pixels, and detecting at least two blank space portions each consisting of a sequence of white pixels exceeding a predetermined number of pixels;
calculating the length and central coordinates of a non-blank space portion that exists between the detected blank space portions; and
comparing the lengths and central coordinates of the non-blank space portions that exist in the vertical and horizontal directions, respectively so as to determine the presence of a 2-dimensional code, and detecting a 2-dimensional code candidate region.

10. A computer-readable recording medium in which a program is recorded, the program causing a computer to carry out the steps of:
scanning image data containing a 2-dimensional code vertically and horizontally;
determining the white/black gradation of scanned pixels, and detecting at least two blank space portions each consisting of a sequence of white pixels exceeding a predetermined number of pixels;
calculating the length and central coordinates of a non-blank space portion that exists between the detected blank space portions; and
comparing the lengths and central coordinates of the non-blank space portions that exist in the vertical and horizontal directions so as to determine the presence of a 2-dimensional code, and detecting a 2-dimensional code candidate region.
